(19) Europäisches Patentamt
European Patent Office
Office européen des brevets

(11) **EP 3 702 202 B1**

(12) **EUROPEAN PATENT SPECIFICATION**

(45) Date of publication and mention
of the grant of the patent:
**18.01.2023 Bulletin 2023/03**

(21) Application number: **19159973.7**

(22) Date of filing: **28.02.2019**

(51) International Patent Classification (IPC):
**B60L 53/67** (2019.01)     **B60L 53/64** (2019.01)

(52) Cooperative Patent Classification (CPC):
**B60L 58/13; B60L 53/64; B60L 53/67;**
B60L 2240/68; B60L 2240/70; B60L 2260/52;
B60L 2260/54; Y02T 10/70; Y02T 10/7072;
Y02T 10/72; Y02T 90/12; Y02T 90/16; Y02T 90/167;
Y04S 30/14

(54) **METHOD AND SYSTEM TO OPTIMIZE DISTRIBUTED CHARGING STATION EFFICIENCY AND USER EXPERIENCE**

VERFAHREN UND SYSTEM ZUR OPTIMIERUNG DER EFFIZIENZ UND DER BENUTZERERFAHRUNG EINER VERTEILTEN LADESTATION

PROCÉDÉ ET SYSTÈME POUR OPTIMISER L'EFFICACITÉ D'UNE STATION DE CHARGE RÉPARTIE ET L'EXPÉRIENCE DE L'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.09.2020 Bulletin 2020/36**

(73) Proprietor: **Bayerische Motoren Werke Aktiengesellschaft**
**80809 München (DE)**

(72) Inventors:
• **Tian, Jilei**
  **Chicago, Illinois 60605 (US)**
• **Cao, Yang**
  **Chicago, Illinois 60601 (US)**

(56) References cited:
**EP-A1- 2 717 016**

**Description**

The invention relates to a method for optimized allocation of highly distributed charging stations to electrical vehicles to improve charging stations efficiency and to improve user experience, and to a computer-readable medium and a system for the same.

With more regulatory pressures on combustion engines and rapid technological improvements in electric powertrains and batteries, there is a rapid growth of demand for electric vehicle (EV). For EVs, one of key challenges affecting user experience is the battery charging, since EV tends to have shorter range and longer charging time, compared to combustion engine propelled vehicles.

There are several approaches to improve the experience of charging electrical vehicles. One approach includes exchangeable batteries, i.e. drive vehicle to the charging station, and replace low power batteries with fully charged battery. This solution needs substantial investment in technology and service facility, and systems to automate the battery exchange. Manufacturers also needs to invest to make the exchangeable batteries reliable. Consumers with new vehicles need to accept and support that their new batteries may be exchanged for older ones. Insurance company will also have to adapt their policy according to this change. Further, it is difficult to distribute this service widely.

Another approach is aiming to improve the user experience by positioning charging station locations on an interactive map and allowing users to navigate to the charging stations based on the locations of the map.

This invention suggests a new approach to improve user experience. In an embodiment, the invention allows optimization of a total detour distance for charging a plurality of vehicle, in contrast to optimizing the charging detour distance for each vehicle separate. The optimization on detour distance is an example and the invention may be optimizing any target, such as prices for charging or waiting time in queues, such as for vehicles queueing for charging. The optimization may be on one of the targets. The optimization may also be on more than one target simultaneously, such as by weighting targets. The objective may also include several optimization targets, that preferable are weighted with respect to each other. The optimization may also include one or more constraints as described herein.

Gasoline refueling services generally is dependent on investment in infrastructure in rather complex and dangerous equipment due to the gasoline supply management, such a pipelines and/or fuel delivery etc. This has resulted into branded services, e.g. Shell, BP, etc.

In contrast to gasoline refueling, due to the rather low cost of infrastructure investment and safe and ease of use, individuals can own charging facilities for their EV. The invention includes realizing that individuals may in theory offer their charging station as a service. The invention further includes realizing that this may lead to a trend shift in the distribution of charging stations services, in terms of geographical locations, and in terms of ownership. Charging station services can be highly distributed. The invention includes realizing the possibilities, and also the technical challenges this potential trend shift may lead to. The invention also includes a addressing the technical challenges with a technical solution for optimizing charging station allocation in such highly distributed environment of charging services.

From highly distributed service supply and demand, it is critical to have the platform to optimally manage the supply and demand in a distributed system due to increased complexity of search and selection, with user experience as the constraint, e.g. to reduce the customer's cost of driving, waiting and money, and optimize the business value for service supplier.

This invention proposes an approach to charging service as the whole system to optimize the performance and value between supplier and demand. In such system, it is an object of the present invention, to optimally allocate charging stations to electrical vehicles.

The allocation of charging stations is solved by the method of claim 1, computer readable medium of claim 14, and system of claim 15.

In particular, the object of the present invention is solved by a computer-implemented method for allocating charging stations, the method comprising:

a) receiving charging station data, the charging station data identifying one or more charging stations and charging station locations;
b) receiving one or more requests to charge one or more requesting vehicles, each request comprising data identifying a departure location and an arrival location of the respective requesting vehicle;
c) receiving and/or determining detours data, the detours data indicating at least one charging station detour distance for a plurality of vehicles, the plurality of vehicles including the requesting vehicles;
d) identifying charging station candidates for the requesting vehicles by optimizing an objective function with linear constraints; and
e) allocate at least some of the charging station candidates to the requesting vehicles;

wherein optimizing the objective function with linear constraints includes reducing a total detour distance, waiting times in a queues, and/or prices for charging for the requesting vehicles.

The requesting vehicle may be able to know feasible routes between departure location and arrival location. Determining detours data may be done based on feasible routes between these locations and charging station locations.

The advantages include, in particular for highly distributed charging stations, optimizing charging stations efficiency and user experience.

The advantages of the holistic approach and the allocation of charging stations include an improved utility of charging stations. The objective may be to optimize across vehicles/users (demand) and service providers (supply). This may in turn lead to improved value for suppliers and consumers. For suppliers, the invention may enable and motivate more charging facility for public use, as well as allow service providers to maximizing their profit with the system easy to manage, as well as meeting personal service availability. For consumer, the system allows reduced charging costs, and reduced waiting and detour distance over time. The method may be used to recommend, and remind users of the best time and location for charging their vehicle, e.g. short detour, low price, no waiting time, optimal charging efficiency. The invention has further advantages for transportation based on autonomous vehicles, where vehicles may be adapted drive and charge themselves without passengers. Total detour distance, and so cost of transportation, may be reduced by optimizing on a fleet of vehicles, rather than optimizing for each vehicle individually. The advantages also include values for community and ecosystem such as environment, traffic, utility and energy efficiency.

The request for charging may be done manually by a user of an EV, or may be done automatically by the EV itself when it, based on sensor inputs, consider it needs charging.

Alternatively, the request may triggered centrally, such as in a central charging station allocation unit, the charging station allocation unit being updated (such as by pull or push messages) from EV with EV data needed for the charging station allocation unit to make a decision that an EV needs charging. Such data may include current battery levels and/or distance to charging stations. The charging station allocation unit may administer a charging station allocation schedule for one or more vehicles that may be updated as described herein based on data from vehicles.

Charging station candidates may be presented to users of vehicles and in response to the presentation, the user may acknowledge the candidate and reserve the charging station so that the charging station is allocated to the vehicle. The allocation may also be automatic, for some or all vehicles, in response to identifying charging station candidates.

The optimizing of the objective function, and the allocation of charging stations, may be performed each time a new vehicle requests charging. It is then possible that a user experience that an initial short detour for charging is progressively increased the closer in time the charging is scheduled to be, as more vehicles are added to the optimization. This may be perceived by consumers as unjust. Alternatively, the optimization may be done at certain intervals, where already allocated charging stations are not updated as more vehicles are requesting charging. "Early birds" will then have more charging stations included in the optimization and higher likelihood of short detour distances. This might lead to a delay for users to be suggested charging station candidates and may therefore be better suited for automatic allocation of charging stations. For autonomous vehicles, and in particular when driving for charging without passenger, the reallocation will be less problematic.

The charging station detour distance is a difference in distance between a first distance of a path going from the departure location to the arrival location via the charging station locations, and a second distance of a path going from the departure location directly to the arrival location.

The advantages include an accurate and fast method for deriving the detour distance that the allocation of charging stations may be optimized on.

In one embodiment, the method further comprises the step of

   determining if a respective vehicle needs charging and issuing the request to charge based on the result of the determining step;
   wherein the vehicles is determined to need charging if an expected battery level is below a threshold battery level; and
   wherein the plurality of vehicles includes the requesting vehicle if the requesting vehicle needs charging.

A challenge with a system approach is the complexity of the optimization problem and the increased computational demands with increased number of requesting vehicle and charging stations. The advantages include a reduced number of vehicles by only including vehicles that is in need of charging at any moment in time. The determining if the vehicle needs charging may be automatic, and a charging station proposed to the driver, reducing the attention needed by the driver on the battery level of the vehicle, further increasing the focus on driving and increasing safety.

For autonomous vehicles, the vehicle may schedule a charging after the current driving route is completed, when the battery level is below a threshold level. The departure location for calculating the detour may then be the destination of the current route, and the arrival location for calculating the detour may be the start (pick-up) location of the next route.

In one embodiment, identifying charging station candidates includes determined if a charging station is a valid candidate for a vehicle, in particular one of the requesting vehicles, where the charging station is a valid candidate for the vehicle if:

i) the charging station detour distance for the vehicle going via the charging station is below a detour distance threshold; and/or

ii) the charging station is reachable by the vehicle, where the charging station may be considered to be reachable if an expected battery consumption between the departure location and the charging station location is below a current battery level; and/or

iii) the charging station is reachable by the vehicle within opening hours of the charging station.

The advantages include reducing the complexity of computations by reducing the number of vehicles candidates for each charging station. By pre-filter vehicles based on their location and battery level, the optimization problem may be substantially reduced in complexity. Further, by including a detour distance threshold the method prevents outliers, i.e. vehicles travelling far for the sake of reducing the overall detour distance. The method may be adapted so that autonomous empty vehicles have a higher detour distance threshold than vehicles with passengers. The detour distance may be in absolute terms of detour distance, or in relative terms (such as a percentage) of the tour distance without charging.

In one embodiment, at least one request identifies an earliest departure time, and the linear constraints include the earliest departure time whereas a charging station candidate is identified and allocated for the vehicle of the request so that the vehicle of the request is scheduled to depart for charging after the earliest departure time; and/or wherein at least one request identifies an latest departure time, and the linear constraints include the latest departure time whereas a charging station candidate is identified and allocated for the vehicle of the request so that the vehicle of the request is scheduled to depart for charging before the latest departure time.

The advantages include a further constraint to allow charging station detours to be better planned in advance for charging during a planned future route. For autonomous vehicles, the earliest departure time may be the estimated arrival time of the present tour, so that the autonomous vehicle may drop of traveling passengers, before initiate driving to an allocated charging station for charging.

In one embodiment, the charging station data further identifies opening hours of at least one of the charging stations and the objective function and/or the linear constraints include the opening hours so that the objective function is optimized, and the vehicles are scheduled for charging during the opening hours.

The advantages include a further constraints to allow for charging station to be out of service during certain time period. The constraint allow optimization of routes to take into consideration that charging station may be needed by the owner, be pre-booked, need maintenance, or needs to be closed for service or for other reasons.

In one embodiment, identifying charging station candidates includes determining a time window for the requesting vehicles, and the linear constraints are adapted so that the requesting vehicles are exclusively allocated to a charging station during the time window; and wherein the method further may comprise:

f) determine a departure time for each of the requesting vehicles so that the vehicles is estimated to arrive to the charging station before the start of the time window.

The advantages include that that a vehicle is signaled a departure time, so that the vehicle is estimated to arrive at the charging station in time for the allocated time window for charging. It prevents vehicles from departing to early, which may lead to waiting time at the charging station, and clogging of the charging station approach way. If the vehicle departures after the determined departure time, the system may be notified, and the vehicle may be re-allocated a new time window at the same chagrining station, or re-allocated another charging station that is available according to the method described herein.

In one embodiment, the linear constraints include the constraint:

$$s_{i,j} \geq q_{k,j} \ or \ s_{k,j} \geq q_{i,j} \ \forall j \in C \ \forall i, k \in U(j) \ i \neq k$$

where

$$s_{i,j} = \begin{cases} charging \ start \ time \ at \ j, \ if \ e_{i,j} = 1 \\ 0, \ otherwise \end{cases}$$

variable the start of the time window; for every user $i \in U$ and charge station $j \in C(i)$, i.e

variable $q_{i,j}$ denotes the time vehicle i is finished charging at charging station j, i.e. the end of the time window;

$e_{i,j}$ is a binary variable that is 1 if vehicle i will visit charge station j, 0 otherwise.

The advantages of including the above linear constraints include that the allocation of charging stations ensures that every charging station is only allocated to one vehicle at any one point in time. If a location contains several charging stations, each charging station is optimized as a separate charging station.

In one embodiment, the objective function and/or the linear constraints include a cost of charging each of the vehicles.

The cost of charging may be a constraint, such as a maximum cost set by a user, or included as a minimization target, to reduce the total cost of charging. The optimization may be balanced with the total detour so that vehicles allocated a charging station with short detour (such as popular charging stations) are charged a higher price than vehicles allocated a charging station with longer detour (such as less popular charging stations). This may lead to an cost effective allocation of vehicles, while supplier increase value of service, and cost of charging and detour decreases, and may be used to provide suggestions for installation of further charging stations at locations which would have a high value of service, that in turn would lead to a decrease in total charging detour distance.

In one embodiment, the requests further identifies current battery level and an energy consumption per distance unit for a requesting vehicle and at least one of the charging station data identifies a price per hour and/or price per energy unit; and

wherein the cost of charging is derived from the current battery level, the energy consumption per distance unit, a distance to each of the charging stations, and the price per hour and/or price per energy unit identified by the charging station data.

The advantages include a service that allow the total cost of charging the vehicle to full at each charging station, taking into consideration the current battery level and energy consumption to drive to the charging station. By including the charging price, such as per hour usage, or per energy unit charged, the supplier can adjust the price so that total return on investment is optimized. The system may suggest a suitable charging price as a service, or set the price directly, taking into consideration the demand to charge at the charging station.

In one embodiment, identifying charging station candidates includes applying a branch and bound method to optimize the objective function with the linear constraints.

The advantages include an algorithm that finds an optimal solution with reasonable computational resources and leads to a reduction in computational usage. Branch and bound is only an example of a technique to solve the mixedinteger programming problem. Any other suitable method may be used needed or developed.

In one embodiment, optimizing the objective function includes maximizing the function

$$\sum_{i \in U} \sum_{j \in C(i)} e_{i,j} - \sigma_1 \sum_{i \in U} \sum_{j \in C(i)} e_{i,j} * detour_{i,j} - \sigma_2 \sum_{i \in U} \sum_{j \in C(i)} e_{i,j} * pc_{i,j}$$

where $i \in U$ denotes a set of vehicel identifiers;

$j \in C(i)$ denotes a set of charge station identifiers;

$e_{i,j}$ is a binary variable that is 1 if vehicle i will visit charge station j, 0 otherwise;

$detour_{i,j}$ denotes charging station detour distance for vehicle i if driving via charging station locations j on its way from the departure location to the arrival location of the vehicle;

$pc_{i,j}$ denotes the cost of charging vehicle i at charging station j;

$\sigma_1$ and $\sigma_2$ are predefined hyperparameters in the range of:

$$0 < \sigma_1 \leq \frac{1}{\max_{i,j} detour_{i,j}}$$

$$0 < \sigma_2 \leq \frac{1}{\max_{i,j}(pc_{i,j})}$$

The advantages include a method that provides a solution that is optimal considering a trade-off between minimizing detour distance and minimizing charging costs. The trade-off may be adjusted by the parameters $\sigma_1$ and $\sigma_2$ and may be predetermined or adjusted dynamically depending on conditions.

In one embodiment, the linear constraints include: and/or

$$\begin{cases} s_{i,j} \geq (ts_i + tsc_{i,j}) * e_{i,j} & \forall i \in U, \forall j \in C(i) \\ s_{i,j} \leq (te_i + tsc_{i,j}) * e_{i,j}. & \forall i \in U, \forall j \in C(i) \end{cases}$$

where

$$\begin{cases} s_{i,j} \geq os_j * e_{i,j} & \forall i \in U, \forall j \in C(i) \\ s_{i,j} + du_{i,j} * e_{i,j} \leq oe_j * e_{i,j} \forall i \in U, \forall j \in C(i) \end{cases}$$

$e_{i,j}$ is a binary variable that is 1 if vehicle i will visit charge station j, 0 otherwise;
$tsc_{i,j}$ denotes travel time between departure location of vehicle i and charging station location of charging station j;
$ts_i$ and $te_i$ are earliest departure time and latest departure time respectively for vehicle i;

$$s_{i,j} = \begin{cases} charging \ start \ time \ at \ j, \ if \ e_{i,j} = 1 \\ 0, \ otherwise \end{cases}$$

variable                                                                        for every user $i \in U$ and charge station $j \in C(i)$;
$os_j$ and $oe_j$ are opening time and closing time respectively for charging station j;
$du_{i,j}$ denotes charging time for vehicle i at charging station j.

The advantages include an allocation of charging stations that ensures that vehicles are able to reach and complete charging within the operation hours of respective allocated charging station.

In particular, the object of the present invention is solved by a computer readable medium comprising instructions, when executed by a processor, cause the processor to carry out the method as described herein.

The benefits and advantages of the aforementioned computer readable medium are equal or similar to the advantages of the above-mentioned method.

In particular, the object of the present invention is solved by charging station allocation system comprising:

a charging station allocation unit;
a charging station;
wherein the a charging station allocation unit is adapted to carry out the method as described herein; and
wherein the charging station allocation unit is further adapted to, based on the result of the step to allocate, send a signal to the charging station, the signal including an allocation message relating to a particular requesting vehicle and a corresponding time window.

The advantages include that distributed charging stations are informed of their allocation to vehicles which, for instance, may allow the charging station to prepare for charging such as indicating that the charging station is allocated to a vehicle. This preparations may include filling short term energy buffers, and/or adjusting voltage/ampere and/or connectors to the vehicle to which it is allocated. The benefits and advantages of the system are further equal or similar to the advantages of the method described herein.

In one embodiment, the charging station is able to identified the particular requesting vehicle; and wherein the charging station allocation system prevents vehicles other than the particular requesting vehicle from using the charging station during the corresponding time windows.

The advantages include that the charging station is available, i.e. not occupied, when the vehicle to which it is allocated is arriving for charging. This prevents reallocating the allocated vehicle and a suboptimal re-routing and/or waiting of vehicles to be charged.

In the following, embodiments of the invention are described with respect to the figures, wherein

Fig. 1    illustrates a vehicles, departure and arrival locations, and detours for charging at alternative charging stations
Fig. 2    illustrates steps of a method according to the embodiment of the invention
Fig. 3    illustrates vehicle and charging station data processing and charging station allocation according to the embodiment of the invention
Fig. 4    schematically illustrates a charging station allocation system according to the embodiment

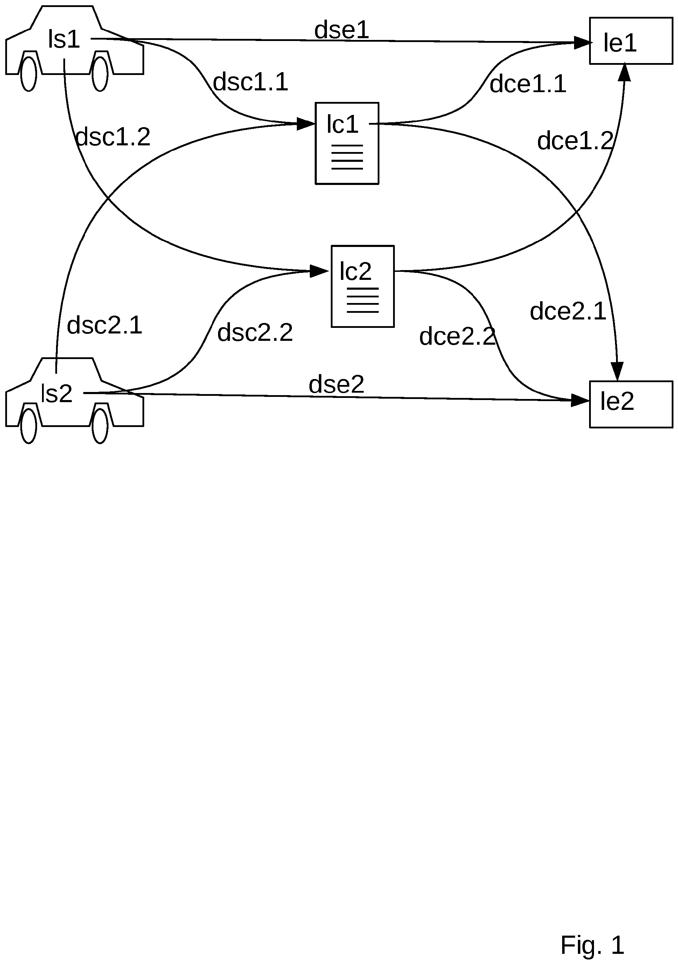

Fig. 1 shows a first charging station location lc1, a second charging station location lc2, a departure location for first vehicle ls1, departure location for second vehicle ls2, arrival location for first vehicle lei, arrival location for second vehicle le2, distance from departure location to arrival location for first vehicle dse1, distance from departure location to arrival location for second vehicle dse2, distance from ls1 to lc1 (dsc1.1), distance from ls1 to lc2 (dsc1.2), distance from ls2 to lc1 (dsc2.1), distance from ls2 to lc2 (dsc2.2), distance from lc1 to lei (dse1.1), distance from lc2 to lei (dse1.2), distance from lc1 to le2 (dse2.1), and distance from lc2 to le2 (dse2.2). Same naming convention applies to other parameters, e.g. travel duration, time instance, departure and destination locations, etc.

The invention involves allocating charging stations (at location lc1 and lc2) to vehicles (with departure location

ls1 and ls2) by optimizing an objective function, so that the total detour distance is minimized. In the example of Fig. 1, involving two vehicles, and two charging stations, there are two possible solutions. The number of vehicles and charging stations in Fig. 1 is an example, and the invention may process any number of vehicles and charging stations for allocation. The number of possible solutions, and so the complexity of the computations increases with the number of vehicles and charging stations processed.

The following notation is used for a given the *ith* user or vehicle, and *jth* charging station:

- $ls_i$, $le_i$ and $lc_j$ denote the vehicle departure and arrival locations for the *ith* user, and the *jth* charging location, respectively.
- $dse_i$ and $tse_i$ denote the driving distance and trip duration from departure and arrival destinations for the *ith* user.
- For the *ith* user, the earliest departure time as $ts_i$, last departure time as $te_i$, current battery level as $B_i$; for *jth* charge station, the price per hour as $p_j$, opening time is from $os_j$ to $oe_j$; if one charge station has multiple charge devices, split it into multiple virtual charge stations with each having 1 charge device.
- Users who need charge service was denoted as U, Charge station list denoted as C, for user $i \in U$, the valid charge station candidates for $i$ is denoted as $C(i)$, similarly, *U(j)* means all users who *have j* as their charging station candidates

Generally the first letter of a notation mean: Location (l), Distance (d), Duration or time (t), Price (p), Batter level (B), Opening (o).

The notations for distance (d) and time (t) have generally tree letters where the second denotes starting point: starting location (s) or charging location (c), and the second denotes end point: charging location (c) or end location (e).

The notations for location (l) generally have two letters, where the second denotes location, such as start location (s), charging location (c), and end location (e).

Where the notations have subscript, the first one (i) generally refer to vehicle/user ID, and the second (j), generally refer to charging station ID.

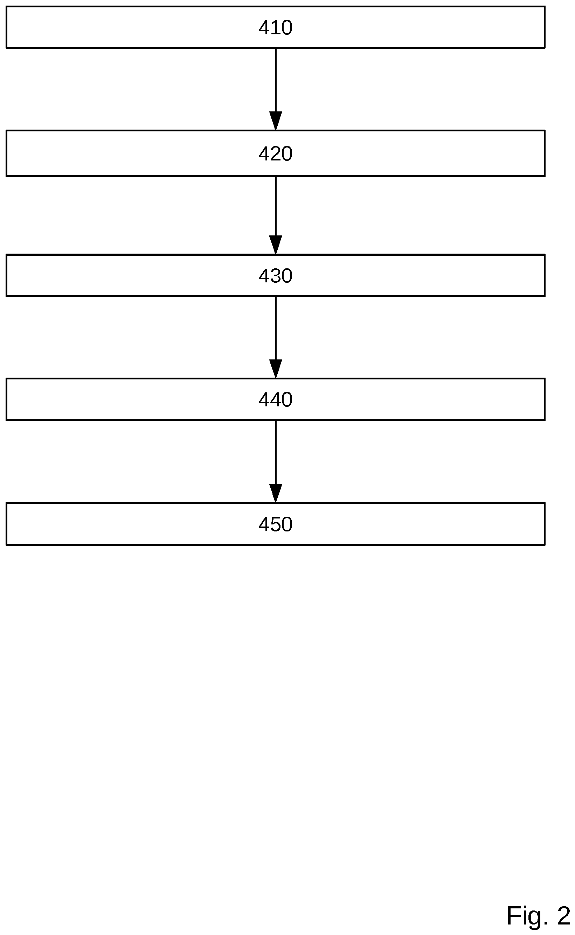

Fig. 2 shows steps of a method according to the embodiment of the invention.

The method include a step of receiving charging station data 410, a step of receiving and/or determining requests to charge requesting vehicles 420, a step of receiving and/or determining detours data 430, a step of identifying charging station candidates 440, and a step of allocating charging stations to vehicles 450. The method may also a step of determine departure time for the vehicles (not shown).

The step of identifying charging station candidate may include finding potential charging station candidates for the users who demand charge service and recommending users charge stations, including the optimized charging time, and that meet user's charging requests, while keeping the overall price and detour distance optimized using mixed integer programming.

Finding potential charging station candidates for the users who demand charge service may include (example):

- Initial: $U = \{\}$
- For the user i, calculate $dse_i = dist(ls_i, le_i)$, get the battery consumption $bse_i$ based on $dse_i$. If $B_i - bse_i > Thrd_i$, it means user doesn't need charging service, different user may have different threshold, (for example, if user has charge device at home, threshold can be low). If user i needs charging service, $U = U \cup \{i\}$, $C(i) = \{\}$

For each charging station j,check *if j* is a valid candidate for user *i* by calculating followings:

- $dsc_{i,j} = dist(ls_i, lc_j)$, $dce_{i,j} = dist(lc_j, le_i)$, $detour_{i,j} = dsc_{i,j} + dce_{i,j} - dse_i$. If $detour_{i,j} > dse_i * Thre_i$, it means charging station *j* is not suitable for user since the detour distance is bigger than user preference, skipping the following step; here $Thre_i$ means the detour threshold user i can accept.

- Get the travel time between $ls_i$ and $lc_j$ as $tsc_{i,j}$, calculating the battery consumption between $ls_i$ and $lc_j$ as $bsc_{i,j}$, if $bsc_{i,j} \geq B_i + \tau$, it means j is not reachable with user's current battery level (here $\tau$ is a small safeguard value to ensure j is reachable), skipping the following step; otherwise calculate the charging time $tc_{i,j}$ and price $pc_{i,j}$ based on battery level ($B_i - bsc_{i,j}$).
- Check time windows compatibility:

    - If $te_i + tsc_{i,j} < os_j$, it means the opening time of *j* is too late for user, skip j
    - If $ts_i + tsc_{i,j} + ct_{i,j} \geq oe_j$, it means the opening time of *j* is too early for user, skip j

- Check other user request, for example, some user may specify the charging price should lower than a certain value, if j meets all requirements, append the charging candidate list as $C(i) = C(i) \cup \{j\}$

Global optimization may include an objective of optimization to recommend each user to the best charge station and the best time user starts the charging The following variables are introduced:

- Binary variable $e_{i,j}$ for every user $i \in U$ and charge station $j \in C(i)$; $e_{i,j}$ = 1 means user $i$ will visit and charge at station j. The variable represents the recommendation of a user to the best charging station.

- Float-point variable $s_{i,j} = \begin{cases} charging\ start\ time\ at\ j,\ if\ e_{i,j} = 1 \\ \qquad\qquad 0,\ otherwise \end{cases}$ for every user $i \in U$ and charge station $j \in C(i)$. The variable represents the charging start time for user. Define $q_{i,j} = s_{i,j} + du_{i,j} * e_{i,j}$, it is obvious that $q_{i,j}$ means the time user finished charging at j if $e_{i,j}$ = 1; otherwise $q_{i,j}$ = 0. Here the time unit is minutes to 0am, for example, 541 means 9:01am.

The objective may be to meet the most charging requests while keeping the entire price and detour smallest. The objective function is expressed as maximizing (example):

$$\sum_{i \in U} \sum_{j \in C(i)} e_{i,j} - \sigma_1 \sum_{i \in U} \sum_{j \in C(i)} e_{i,j} * detour_{i,j} - \sigma_2 \sum_{i \in U} \sum_{j \in C(i)} e_{i,j} * pc_{i,j}$$

Where $\sigma_1$ and $\sigma_2$ are predefined hyperparameters, that may be in the range of:

$$0 < \sigma_1 \le \frac{1}{\max\limits_{i,j} detour_{i,j}}$$

$$0 < \sigma_2 \le \frac{1}{\max\limits_{i,j}(pc_{i,j})}$$

Linear constrains for optimization may include

- Every user can visit no more than 1 charging station.

$$\sum_{j \in C(i)} e_{i,j} \le 1 \ \forall\ i \in U \qquad\qquad (1)$$

- Ensure the charging start time is consistent with user's departure time window.

$$\begin{cases} s_{i,j} \ge (ts_i + tsc_{i,j}) * e_{i,j} & \forall i \in U, \forall j \in C(i) \\ s_{i,j} \le (te_i + tsc_{i,j}) * e_{i,j}. & \forall i \in U, \forall j \in C(i) \end{cases} \qquad (2)$$

- Ensure charging time is consistent with charging station's opening time.

$$\begin{cases} s_{i,j} \ge os_j * e_{i,j} & \forall i \in U, \forall j \in C(i) \\ s_{i,j} + du_{i,j} * e_{i,j} \le oe_j * e_{i,j} & \forall i \in U, \forall j \in C(i) \end{cases} \qquad (3)$$

- At any time, ensure at the most only one car can use charging service at one charge station. $[s_{i,j},\ q_{i,j}]$ is the time window user $i$ charges at $j$, (If user didn't visit $j$, $[s_{i,j},\ q_{i,j}] = [0,0]$) , it is easy to verify that if $j$ is not visited by both $i$ and $k$, (4) is always true; if both $i$ and $k$ visited $j$, (4) ensures the charging time windows of $i,k$ have no overlap.

$$s_{i,j} \ge q_{k,j}\ or\ s_{k,j} \ge q_{i,j}\ \forall j \in C\ \forall i,k \in U(j)\ i \ne k \qquad (4)$$

- In MIP, it is not able to process "or" operator defined in (4), Instead we transformed it into linear constraint by introducing new binary variable $y_{i,k,j}$, replacing $q_{i,j} = s_{i,j} + du_{i,j} * e_{i,j}$, (4) could be rewritten as:

$$\begin{cases} s_{i,j} - s_{k,j} - du_{k,j} * e_{k,j} \geq -M * y_{i,k,j} \\ s_{k,j} - s_{i,j} - du_{i,j} * e_{i,j} \geq -M * (1 - y_{i,k,j}) \end{cases} \tag{5}$$

Where M is big constant, for example of taking maximum opening duration of charging station.

Using method for solving mixed integer programming (MIP) problems, such as branch and bound, optimized values of $e_{i,j}$, $s_{i,j}$ for every $(i,j)$ $i \in U, j \in C(i)$ according to constraint defined in (1)-(3),(5) with the objective function to be optimized. For a user i, start time for charging time is given below:

$$\dot{s}_i = s_{i,j^*} = \max_{j \in U(i)} s_{i,j};$$

Among all charge stations, only one station is visited per user, so only one of $s_{i,j}$ is bigger than 0.

If $\dot{s}_i > 0$, user i is recommended to charge at station $j^*$ at time $\dot{s}_i$. Thus departure time should be $\dot{st}_i = \dot{s}_i - tsc_{i,j^*}$. A push notification should be sent to user i perhaps 15 minutes before $\dot{st}_i$, the notification will contain information such as time-to-leave, navigation info about charging station to go ($j^*$).

From the objective function, the system recommends the user the charging station that intends to be optimal for price and detour while meeting all condition in the personal request.

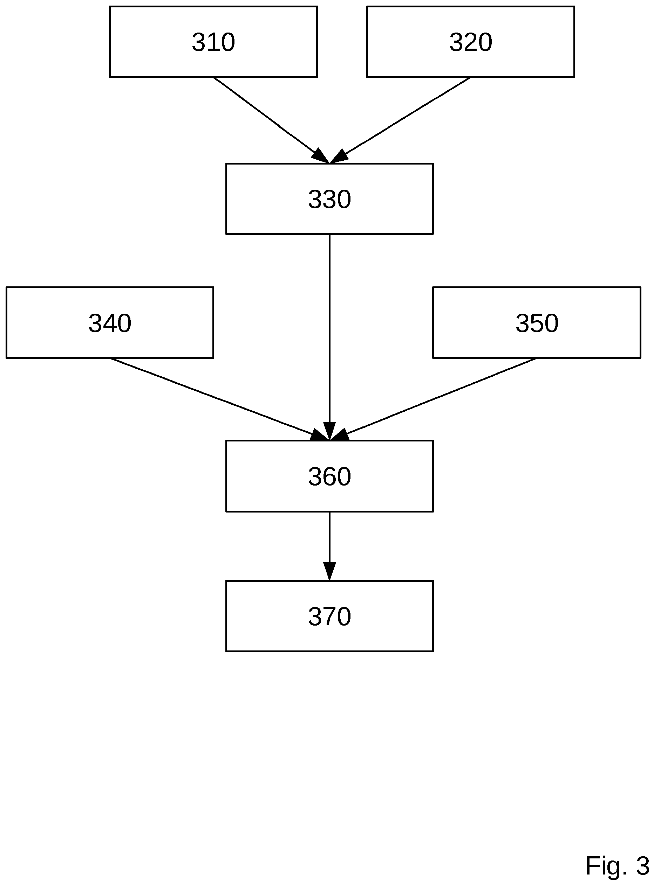

Fig. 3 shows an embodiment comprising vehicle data 310, charging station data 320, pre-filtering module 330, objective function 340, constraints 350, optimization module 360, and allocation module 370. Vehicle data 310 contains information regarding electrical vehicle, such as locations, battery levels, current and planned trip information, etc. Charging station data 320 contains information regarding charging stations, such as locations, price schemes and prices, availability, opening hours, etc. Optional pre-filter module 330 filters vehicles and /or charging stations. The pre-filter module 330 may filter vehicles that are in need of charging as described herein. Pre-filter module 330 may also reduce the number of potential charging stations for each vehicle by filter charging stations that clearly is beyond reach for each vehicle as described herein. Optimization module 360 finds optimal charging stations for vehicles by optimizing the objective function 340 on the vehicle data 310 and charging station data 320 (that may have been pre-filtered). Optionally, the optimization module 360 may apply constraints 350 (such as linear constraints) as described herein when finding optimal charging stations for vehicles. The optimal charging stations may optionally be proposed to the users/vehicles as candidates. Allocated module 370 allocated the charging stations to the vehicles.

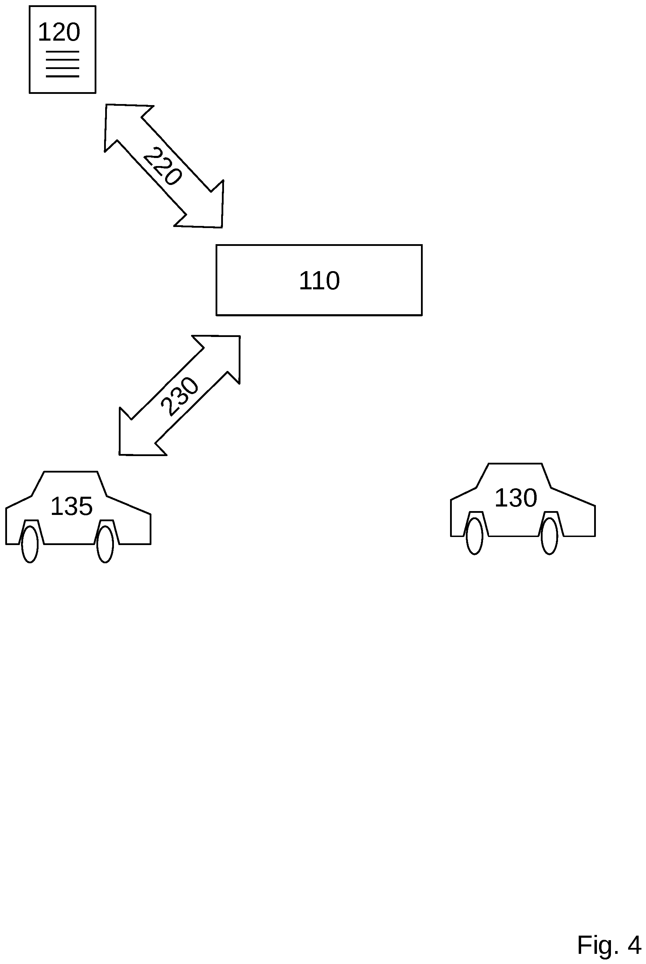

Fig. 4 shows charging station allocation unit 110, charging station 120, vehicle 135, charging station communication channel 220, vehicle communication channel 230.

Charging station allocation unit 110 may receive a request from vehicle 135 (such as via vehicle communication channel 230), to charge a vehicle. The charging station allocation unit 110 may, using the data provided in the request, allocate charging station 120 to vehicle 135 using a method as described herein. The charging station allocation unit 110 may also propose charging station 120 to vehicle 135 (and temporary book charging station 120), based on data provided in the request, and the vehicle may, in response, confirm the proposal. The charging station 120 may be allocated to vehicle 135 on receipt of the confirmation.

The charging station allocation unit 110 may further, such as via charging station communication channel 220, signal the allocation of charging station 120 to charging station 120. The charging station 120 may prevent other vehicles, such as vehicle 130, from using the charging station during the allocation to vehicle 135.

The method and/or the charging station allocation unit 110 may be implemented in a platform for allocating charging stations to vehicles. The platform may allow suppliers and consumers to interact with the platform. Charging station suppliers may, as examples, provide following information to platform: operation business hours, pricing policy such as charging flat fee or price per hour or price per energy unit, or earning target), etc. The platform may offer the following information to the suppliers: allocation of charging station to vehicle, suggestion for optimizing the business value.

Consumers may provide the following information to platform: information about current location and batter level, information about next trip, selection and confirmation for recommended charging service. The platform may further offer the following information to consumers: recommend the charging service, optimize consumer experience to minimize the charging cost, information for navigation to the charging station from the departure, or current location.

The platform is provided with valuable data on charging stations and vehicles. It may optimize the global system performance as a whole, as well as bringing the personal intelligence and relevant service for consumers. The platform enables highly distributed charging services to work efficiently, including large amount of small service providers through the recommendation and price policy.

Reference numerals

| | |
|---|---|
| lc1 | first charging station location |
| lc2 | second charging station location |
| ls1 | departure location for first vehicle |
| ls2 | departure location for second vehicle |
| lei | arrival location for first vehicle |
| le2 | arrival location for second vehicle |
| dse1 | distance from departure location to arrival location for first vehicle |
| dse2 | distance from departure location to arrival location for second vehicle |
| dsc1.1 | distance from ls1 to lc1 |
| dsc1.2 | distance from ls1 to lc2 |
| dsc2.1 | distance from ls2 to lc1 |
| dsc2.2 | distance from ls2 to lc2 |
| dce1.1 | distance from lc1 to lei |
| dce1.2 | distance from lc2 to lei |
| dce2.1 | distance from lc1 to le2 |
| dce2.2 | distance from lc2 to le2 |
| 110 | charging station allocation unit |
| 120 | charging station |
| 135 | vehicle |
| 220 | charging station communication channel |
| 230 | vehicle communication channel |
| 310 | vehicle data |
| 320 | charging station data |
| 330 | pre-filtering |
| 340 | objective function |
| 350 | constraints |
| 360 | optimization |
| 370 | allocation |
| 410 | step of receiving charging station data |
| 420 | receiving and/or determining one or more requests to charge a requesting vehicle |
| 430 | receiving and/or determining detours data |
| 440 | identifying charging station candidates |
| 450 | allocating charging stations to vehicles |

**Claims**

1. Computer-implemented method for allocating charging stations, the method comprising:

   a) receiving charging station data, the charging station data identifying one or more charging stations and charging station locations (lc1, lc2);
   b) receiving requests (R) to charge requesting vehicles, each request comprising data identifying a departure location (ls1, ls2) and an arrival location (lei, le2) of the respective requesting vehicle;
   c) receiving and/or determining detours data, the detours data indicating at least one charging station detour distance for a plurality of vehicles, the plurality of vehicles including the requesting vehicles;
   d) identifying charging station candidates for the requesting vehicles by optimizing an objective function (F) with linear constraints; and
   e) allocate at least some of the charging station candidates to the requesting vehicles;

   **characterized in that** optimizing the objective function (F) with linear constraints includes reducing a total detour distance, waiting times in queues and/or prices for charging for the requesting vehicles; and wherein the charging station detour distance is a difference in distance between a first distance (dsc1.1, dce1.1) of a path going from the departure location (ls1, ls2) to the arrival location (le1, le2) via the charging station locations (lc1, lc2), and a second distance (dse1, dse2) of a path going from the departure location (ls1, ls2) directly to the arrival location (le1, le2).

2. The method of claim 1, comprising the step of

determining if a requesting vehicle needs charging and issuing the request to charge (R) based on the result of the determining step;
wherein the vehicles are determined to need charging if an expected battery level is below a threshold battery level; and
wherein the plurality of vehicles includes the requesting vehicle if the requesting vehicle needs charging.

3. The method of claim 1 or claim 2,
wherein identifying charging station candidates includes determine if a charging station is a valid candidate for a vehicle, in particular one of the requesting vehicles, where the charging station is a valid candidate for the vehicle if:

i) the charging station detour distance for the vehicle going via the charging station is below a detour distance threshold; and/or
ii) the charging station is reachable by the vehicle, where the charging station may be considered to be reachable if an expected battery consumption between the departure location and the charging station location is below a current battery level; and/or
iii) the charging station is reachable by the vehicle within opening hours of the charging station.

4. The method of any of the previous claims,

wherein at least one request identifies an earliest departure time, and the linear constraints include the earliest departure time whereas a charging station candidate is identified and allocated for the vehicle of the request so that the vehicle of the request is scheduled to depart for charging after the earliest departure time; and/or
wherein at least one request identifies a latest departure time, and the linear constraints include the latest departure time whereas a charging station candidate is identified and allocated for the vehicle of the request so that the vehicle of the request is scheduled to depart for charging before the latest departure time.

5. The method of any of the previous claims,
wherein the charging station data further identifies opening hours of at least one of the charging stations and the objective function and/or the linear constraints include the opening hours so that the objective function is optimized, and the vehicles are scheduled for charging during the opening hours.

6. The method of any of the previous claims,

wherein identifying charging station candidates includes determining a time window for the requesting vehicles, and the linear constraints are adapted so that the requesting vehicles are exclusively allocated to a charging station during the time window; and
wherein the method further may comprise:
f) determine a departure time for each of the requesting vehicles so that the vehicles are estimated to arrive to the charging station before the start of the time window.

7. The method of claim 6,

wherein the linear constraints include:

$$s_{i,j} \geq q_{k,j} \ or \ s_{k,j} \geq q_{i,j} \ \forall j \in C \ \forall i, k \in U(j) \ i \neq k$$

where

variable $s_{i,j} = \begin{cases} charging \ start \ time \ at \ j, \ if \ e_{i,j} = 1 \\ 0, \ otherwise \end{cases}$ for every user $i \in U$ and charge station $j \in C(i)$, i.e the start of the time window;
variable $q_{i,j}$ denotes the time vehicle i is finished charging at charging station j, i.e. the end of the time window.

8.  The method of any of the previous claims,
    wherein the objective function and/or the linear constraints include a cost of charging each of the vehicles.

9.  The method of any of the previous claims,

    wherein the requests further identifies current battery level and an energy consumption per distance unit for each of the requesting vehicles and at least one of the charging station data identifies a price per hour and/or price per energy unit; and
    wherein the cost of charging is derived from the current battery level, the energy consumption per distance unit, a distance to each of the charging stations, and the price per hour and/or price per energy unit identified by the charging station data.

10. The method of any of the previous claims,
    wherein identifying charging station candidates includes applying a branch and bound method to optimize the objective function with the linear constraints.

11. The method of any of the previous claims,

    wherein optimizing the objective function includes maximizing the function

    $$\sum_{i \in U} \sum_{j \in C(i)} e_{i,j} - \sigma_1 \sum_{i \in U} \sum_{j \in C(i)} e_{i,j} * detour_{i,j} - \sigma_2 \sum_{i \in U} \sum_{j \in C(i)} e_{i,j} * pc_{i,j}$$

    where $i \in U$ denotes a set of vehicle identifiers;
    $j \in C(i)$ denotes a set of charge station identifiers;
    $e_{i,j}$ is a binary variable that is 1 if vehicle i will visit charge station j, 0 otherwise;
    $detour_{i,j}$ denotes charging station detour distance for vehicle i if driving via charging station locations j on its way from the departure location to the arrival location of the vehicle;
    $pc_{i,j}$ denotes the cost of charging vehicle i at charging station j;
    $\sigma_1$ and $\sigma_2$ are predefined hyperparameters in the range of:

    $$0 < \sigma_1 \leq \frac{1}{\max\limits_{i,j} detour_{i,j}}$$

    $$0 < \sigma_2 \leq \frac{1}{\max\limits_{i,j}(pc_{i,j})}$$

12. The method of any of the previous claims,

    wherein the linear constraints include:

    $$\begin{cases} s_{i,j} \geq (ts_i + tsc_{i,j}) * e_{i,j} & \forall i \in U, \forall j \in C(i) \\ s_{i,j} \leq (te_i + tsc_{i,j}) * e_{i,j}. & \forall i \in U, \forall j \in C(i) \end{cases}$$

    and/or

    $$\begin{cases} s_{i,j} \geq os_j * e_{i,j} & \forall i \in U, \forall j \in C(i) \\ s_{i,j} + du_{i,j} * e_{i,j} \leq oe_j * e_{i,j} & \forall i \in U, \forall j \in C(i) \end{cases}$$

    where
    $e_{i,j}$ is a binary variable that is 1 if vehicle i will visit charge station j, 0 otherwise;

$tsc_{i,j}$ denotes travel time between departure location of vehicle i and charging station location of charging station j;

$ts_i$ and $te_i$ are earliest departure time and latest departure time respectively for vehicle i;

variable $$s_{i,j} = \begin{cases} charging\ start\ time\ at\ j,\ if\ e_{i,j} = 1 \\ 0,\ otherwise \end{cases}$$ for every user $i \in U$ and charge station $j \in C(i)$;

$os_j$ and $oe_j$ are opening time and closing time respectively for charging station j;

$du_{i,j}$ denotes charging time for vehicle i at charging station j.

13. Computer readable medium comprising instructions, when executed by a processor, cause the processor to carry out the method of one of the previous claims.

14. Charging station allocation system comprising:

a charging station allocation unit (110);

a charging station (120);

wherein the charging station allocation unit (110) is adapted to carry out the method of one of the claims 1 to 12; and

wherein the charging station allocation unit (110) is further adapted to, based on the result of the step to allocate, send a signal to the charging station (120), the signal including an allocation message relating to a particular requesting vehicle and a corresponding time window.

15. The charging station allocation system of claim 14,

wherein the charging station is able to identified the particular requesting vehicle; and

wherein the charging station allocation system prevents vehicles other than the particular requesting vehicle from using the charging station (120) during the corresponding time windows.

**Patentansprüche**

1. Computerumgesetztes Verfahren zum Zuordnen von Ladestationen, wobei das Verfahren umfasst:

a) Empfangen von Ladestationsdaten, wobei die Ladestationsdaten eine oder mehrere Ladestationen und Ladestationsorte (lc1, lc2) identifizieren;

b) Empfangen von Anfragen (R) zum Laden von anfragenden Fahrzeugen, wobei jede Anfrage Daten umfasst, die einen Abfahrtsort (ls1, ls2) und einen Ankunftsort (le1, le2) des jeweiligen anfragenden Fahrzeugs identifizieren;

c) Empfangen und/oder Bestimmen von Umwegdaten, wobei die Umwegdaten mindestens eine Ladestations-Umwegdistanz für mehrere Fahrzeuge anzeigt, die mehreren Fahrzeuge die anfragenden Fahrzeuge beinhalten;

d) Identifizieren von Ladestationskandidaten für die anfragenden Fahrzeuge durch Optimieren einer Zielfunktion (F) mit linearen Beschränkungen; und

e) Zuordnen mindestens einiger der Ladestationskandidaten zu den anfragenden Fahrzeugen;

**dadurch gekennzeichnet, dass** das Optimieren der Zielfunktion (F) mit linearen Beschränkungen das Reduzieren einer Gesamtumwegdistanz, Wartezeiten in Schlangen und/oder Preise für das Laden für die anfragenden Fahrzeuge beinhaltet; und

wobei die Ladestations-Umwegdistanz eine Differenz bei der Distanz zwischen einer ersten Distanz (dsc1.1, dce1.1) eines Pfads, der von dem Abfahrtsort (ls1, ls2) zu dem Ankunftsort (le1, le2) über die Ladestationsorte (lc1, lc2) verläuft, und eine zweite Distanz (dse1, dse2) eines Pfads, der von dem Abfahrtsort (ls1, ls2) direkt zu dem Ankunftsort (le1, le2) verläuft, ist.

2. Verfahren nach Anspruch 1, umfassend den Schritt des

Bestimmens, ob ein anfragendes Fahrzeug geladen werden muss, und Erteilen der Anfrage zum Laden (R) auf Basis des Ergebnisses des Bestimmungsschritts;

wobei bestimmt wird, dass die Fahrzeuge geladen werden müssen, falls ein erwarteter Batteriestand unter einem Schwellwertbatteriestand liegt; und

wobei die mehreren Fahrzeuge das anfragende Fahrzeug beinhalten, falls das anfragende Fahrzeug geladen werden muss.

3.  Verfahren nach Anspruch 1 oder Anspruch 2,
    wobei das Identifizieren von Ladestationskandidaten das Bestimmen beinhaltet, ob eine Ladestation ein gültiger Kandidat für ein Fahrzeug ist, insbesondere eines der anfragenden Fahrzeuge, wobei die Ladestation ein gültiger Kandidat für das Fahrzeug ist, falls:

    i) die Ladestations-Umwegdistanz für das zu der Ladestation fahrende Fahrzeug unter einem Umwegdistanzschwellwert liegt; und/oder
    ii) die Ladestation durch das Fahrzeug erreicht werden kann, wobei die Ladestation als erreichbar angesehen werden kann, falls ein erwarteter Batterieverbrauch zwischen dem Abfahrtsort und dem Ladestationsort unter einem aktuellen Batteriestand liegt; und/oder
    iii) die Ladestation durch das Fahrzeug innerhalb von Öffnungszeiten der Ladestation erreichbar ist.

4.  Verfahren nach einem der vorhergehenden Ansprüche,

    wobei mindestens eine Anfrage eine früheste Abfahrtszeit identifiziert, und die linearen Beschränkungen die früheste Abfahrtszeit beinhalten, wohingegen ein Ladestationskandidat identifiziert und für das Fahrzeug der Anfrage zugeordnet wird, so dass geplant wird, dass das Fahrzeug der Anfrage zum Laden nach der frühesten Abfahrtszeit abfährt; und/oder
    wobei mindestens eine Anfrage eine späteste Abfahrtszeit identifiziert und die linearen Beschränkungen die späteste Abfahrtszeit beinhalten, wohingegen ein Ladestationskandidat identifiziert und für das Fahrzeug der Anfrage zugeordnet wird, so dass geplant wird, dass das Fahrzeug der Anfrage zum Laden vor der spätesten Abfahrtszeit abfährt.

5.  Verfahren nach einem der vorhergehenden Ansprüche,
    wobei die Ladestationsdaten weiter Öffnungszeiten mindestens einer der Ladestationen identifizieren und die Zielfunktion und/oder die linearen Beschränkungen die Öffnungszeiten beinhalten, so dass die Zielfunktion optimiert wird und geplant wird, dass die Fahrzeuge während der Öffnungszeiten laden.

6.  Verfahren nach einem der vorhergehenden Ansprüche,

    wobei das Identifizieren von Ladestationskandidaten das Bestimmen eines Zeitfensters für das anfragende Fahrzeug beinhaltet und die linearen Beschränkungen so ausgelegt sind, dass die anfragenden Fahrzeuge ausschließlich eine Ladestation während des Zeitfensters zugeordnet werden; und
    wobei das Verfahren weiter umfassen kann:
    f) Bestimmen einer Abfahrtszeit für jedes der anfragenden Fahrzeuge, so dass die Fahrzeuge geschätzt an der Ladestation vor dem Beginn des Zeitfensters ankommen.

7.  Verfahren nach Anspruch 6,

    wobei die linearen Beschränkungen beinhalten:

    $$s_{i,j} \geq q_{k,j} \ oder \ s_{k,j} \geq q_{i,j} \forall j \in C \forall i, k \in U(j) i \neq k$$

    wobei

    $$s_{i,j} = \begin{cases} Ladungsstartzeit \ bei \ j, falls \ e_{i,j} = 1 \\ 0, \ ansonsten \end{cases}$$

    die Variable für jeden Nutzer $i \in U$ und Ladestation $j \in C(i)$, d.h. dem Start des Zeitfensters;
    die Variable $q_{i,j}$ die Zeit bezeichnet, während der das Fahrzeug i das Laden bei der Ladestation j beendet, d.h. das Ende des Zeitfensters.

8.  Verfahren nach einem der vorhergehenden Ansprüche,
    wobei die Zielfunktion und/oder die linearen Beschränkungen Kosten des Ladens jedes der Fahrzeuge beinhalten.

9.  Verfahren nach einem der vorhergehenden Ansprüche,

    wobei die Anfragen weiter einen aktuellen Batteriestand und einen Energieverbrauch pro Distanzeinheit für jedes der anfragenden Fahrzeuge identifiziert und mindestens eine der Ladestationsdaten einen Preis pro Stunde und/oder einen Preis pro Energieeinheit identifiziert; und
    wobei die Kosten des Ladens von dem aktuellen Batteriestand, dem Energieverbrauch pro Distanzeinheit, einer Distanz zu jeder der Ladestationen und dem Preis pro Stunde und/oder dem Preis pro Energieeinheit, durch die Ladestationsdaten identifiziert, abgeleitet werden.

10. Verfahren nach einem der vorhergehenden Ansprüche,
    wobei das Identifizieren von Ladestationskandidaten das Anwenden eines Verzweigungs-und-Begrenzungs-Verfahrens zum Optimieren der Zielfunktion mit den linearen Beschränkungen beinhaltet.

11. Verfahren nach einem der vorhergehenden Ansprüche,

    wobei das Optimieren der Zielfunktion das Maximieren folgender Funktion beinhaltet

    $$\sum_{i \in U} \sum_{j \in C(i)} e_{i,j} - \sigma_1 \sum_{i \in U} \sum_{j \in C(i)} e_{i,j} * detour_{i,j} - \sigma_2 \sum_{i \in U} \sum_{j \in C(i)} e_{i,j} * pc_{i,j}$$

    wobei $i \in U$ eine Menge von Fahrzeugkennungen bezeichnet;
    $j \in C(t)$ eine Menge von Ladestationskennungen bezeichnet;
    $e_{i,j}$ eine binäre Variable ist, die 1 beträgt, falls das Fahrzeug i die Ladestation j besucht, ansonsten 0 ist;
    $detour_{i,j}$ eine Ladestations-Umwegdistanz für das Fahrzeug i bezeichnet, falls es über die Ladestationsorte j auf seinem Weg von dem Abfahrtsort zu dem Ankunftsort des Fahrzeugs fährt;
    $pc_{i,j}$ die Kosten des Ladens des Fahrzeugs i an der Ladestation j bezeichnet;
    $\sigma_1$ und $\sigma_2$ vordefinierte Hyperparameter sind im Bereich von:

    $$0 < \sigma_1 \leq \frac{1}{\max\limits_{i,j} detour_{i,j}}$$

    $$0 < \sigma_2 \leq \frac{1}{\max\limits_{i,j}(pc_{i,j})}$$

12. Verfahren nach einem der vorhergehenden Ansprüche,

    wobei die linearen Beschränkungen beinhalten:

    $$\begin{cases} s_{i,j} \geq (ts_i + tsc_{i,j}) * e_{i,j} & \forall i \in U, \forall j \in C(i) \\ s_{i,j} \leq (te_i + tsc_{i,j}) * e_{i,j}. & \forall i \in U, \forall j \in C(i) \end{cases}$$

    und/oder

    $$\begin{cases} s_{i,j} \geq os_j * e_{i,j} & \forall i \in U, \forall j \in C(i) \\ s_{i,j} + du_{i,j} * e_{i,j} \leq oe_j * e_{i,j} & \forall i \in U, \forall j \in C(i) \end{cases}$$

    wobei
    $e_{i,j}$ eine binäre Variable ist, die 1 beträgt, falls das Fahrzeug i die Ladestation j besucht, ansonsten 0 ist;
    $tsc_{i,j}$ eine Fahrzeit zwischen dem Abfahrtsort des Fahrzeugs i und dem Ladestationsort der Ladestation j be-

zeichnet;

$ts_i$ und $te_i$ früheste Abfahrtszeit beziehungsweise späteste Abfahrtszeit für das Fahrzeug i sind;

die Variable $s_{i,j} = \begin{cases} Ladungsstartzeit\ bei\ j, if\ e_{i,j} = 1 \\ 0,\ ansonsten \end{cases}$ für jeden Nutzer i E *U* und Ladestation $j \in$ C(*i*);

$os_j$ und $oe_j$ Öffnungszeit beziehungsweise Schließzeit für die Ladestation j sind;

$du_{i,j}$ die Ladezeit für das Fahrzeug i bei der Ladestation j bezeichnet.

13. Computerlesbares Medium, umfassend Anweisungen, die bei Ausführung durch einen Prozessor bewirken, dass der Prozessor das Verfahren nach einem der vorhergehenden Ansprüche durchführt.

14. Ladestationszuordnungssystem, umfassend:

eine Ladestations-Zuordnungseinheit (110);
eine Ladestation (120);
wobei die Ladestations-Zuordnungseinheit (110) ausgelegt ist zum Durchführen des Verfahrens nach einem der Ansprüche 1 bis 12; und
wobei die Ladestations-Zuordnungseinheit (110) weiter ausgelegt ist zum Senden, auf Basis des Ergebnisses des Schritts zum Zuordnen, eines Signals an die Ladestation (120), wobei das Signal eine Zuordnungsnachricht bezüglich eines bestimmten anfragenden Fahrzeugs und ein entsprechendes Zeitfenster enthält.

15. Ladestations-Zuordnungssystem nach Anspruch 14,

wobei die Ladestation das bestimmte anfragende Fahrzeug identifizieren kann; und
wobei das Ladestations-Zuordnungssystem verhindert, dass andere Fahrzeuge als das bestimmte anfragende Fahrzeug die Ladestation (120) während der entsprechenden Zeitfenster nutzen.

**Revendications**

1. Procédé mis en œuvre par ordinateur pour allouer des bornes de recharge, le procédé comprenant :

a) la réception de données de borne de recharge, les données de borne de recharge identifiant une ou plusieurs bornes de recharge et des emplacements de borne de recharge (lc1, lc2) ;
b) la réception de demandes (R) pour charger des véhicules en demande, chaque demande comprenant des données identifiant un emplacement de départ (ls1, ls2) et un emplacement d'arrivée (le1, le2) du véhicule en demande respectif ;
c) la réception et/ou la détermination de données de détours, les données de détours indiquant au moins une distance de détour de borne de recharge pour une pluralité de véhicules, la pluralité de véhicules comportant les véhicules en demande ;
d) l'identification de bornes de recharge candidates pour les véhicules en demande en optimisant une fonction objectif (F) avec des contraintes linéaires ; et
e) l'allocation d'au moins quelques-unes des bornes de recharge candidates aux véhicules en demande ;

**caractérisé en ce que** l'optimisation de la fonction objectif (F) avec des contraintes linéaires comporte la réduction d'une distance de détour totale, de temps d'attente dans des queues et/ou de prix de charge pour les véhicules en demande ; et
la distance de détour de borne de recharge étant une différence en distance entre une première distance (dsc1.1, dce1.1) d'un chemin allant de l'emplacement de départ (ls1, ls2) à l'emplacement d'arrivée (le1, le2) via les emplacements de borne de recharge (lc1, lc2), et une deuxième distance (dse1, dse2) d'un chemin allant de l'emplacement de départ (ls1, ls2) directement à l'emplacement d'arrivée (le1, le2).

2. Procédé selon la revendication 1, comprenant l'étape de

détermination si un véhicule en demande a besoin d'une charge et l'émission de la demande de charge (R) sur la base du résultat de l'étape de détermination ;
détermination que les véhicules ont besoin de charge si un niveau de batterie attendu est en dessous d'un niveau de batterie seuil ; et
la pluralité de véhicules comportant le véhicule en demande si le véhicule en demande a besoin de charge.

3. Procédé selon la revendication 1 ou la revendication 2,
l'identification de bornes de recharge candidates comportant la détermination si une borne de recharge est une candidate valide pour un véhicule, particulièrement un des véhicules en demande, la borne de recharge étant une candidate valide pour le véhicule si :

i) la distance de détour de borne de recharge pour le véhicule passant par la borne de recharge est en dessous d'un seuil de distance de détour ; et/ou
ii) la borne de recharge est atteignable par le véhicule, la borne de recharge pouvant être considérée comme atteignable si une consommation de batterie attendue entre l'emplacement de départ et l'emplacement de borne de recharge est en dessous d'un niveau de batterie actuel ; et/ou
iii) la borne de recharge est atteignable par le véhicule dans des heures d'ouverture de la borne de recharge.

4. Procédé selon l'une quelconque des revendications précédentes,

au moins une demande identifiant un instant de départ le plus tôt, et les contraintes linéaires comportant l'instant de départ le plus tôt tandis qu'une borne de recharge candidate est identifiée et allouée pour le véhicule de la demande de sorte que le départ du véhicule de la demande est planifié pour une charge après l'instant de départ le plus tôt ; et/ou
au moins une demande identifiant un instant de départ le plus tard, et les contraintes linéaires comportant l'instant de départ le plus tard tandis qu'une borne de recharge candidate est identifiée et allouée pour le véhicule de la demande de sorte que le départ du véhicule de la demande est planifié pour une charge avant l'instant de départ le plus tard.

5. Procédé selon l'une quelconque des revendications précédentes,
les données de borne de recharge identifiant en outre des heures d'ouverture d'au moins une des bornes de recharge et la fonction objectif et/ou les contraintes linéaires comportant les heures d'ouverture de sorte que la fonction objectif est optimisée, et la charge des véhicules étant planifiée pendant les heures d'ouverture.

6. Procédé selon l'une quelconque des revendications précédentes,

l'identification de bornes de recharge candidates comportant la détermination d'une fenêtre temporelle pour les véhicules en demande, et les contraintes linéaires étant conçues de sorte que les véhicules en demande sont exclusivement alloués à une borne de recharge pendant la fenêtre temporelle ; et
le procédé pouvant comprendre en outre :
f) la détermination d'un instant de départ pour chacun des véhicules en demande de sorte que l'arrivée des véhicules à la borne de recharge est estimée avant le début de la fenêtre temporelle.

7. Procédé selon la revendication 6,

les contraintes linéaires comportant :

$$s_{i,j} \geq q_{k,j} \ ou \ s_{k,j} \geq q_{i,j} \ \forall j \ \epsilon \ C \ \forall i, k \ \epsilon \ U(j) \ i \neq k$$

où
la variable

$$s_{i,j} = \begin{cases} instant \ de \ début \ de \ charge \ à \ j, si \ e_{i,j} = 1 \\ 0, autrement \end{cases}$$

pour tout utilisateur $i \in U$ et borne de recharge $j \in C(i)$, c'est-à-dire le début de la fenêtre temporelle ;
la variable $q_{i,j}$ indique l'instant auquel le véhicule i a terminé la charge à la borne de recharge j, c'est-à-dire la fin de la fenêtre temporelle.

**8.** Procédé selon l'une quelconque des revendications précédentes,
la fonction objectif et/ou les contraintes linéaires comportant un coût de charge de chacun des véhicules.

**9.** Procédé selon l'une quelconque des revendications précédentes,

les demandes identifiant en outre un niveau de batterie actuel et une consommation d'énergie par unité de distance pour chacun des véhicules en demande et au moins une des données de borne de recharge identifiant un prix par heure et/ou un prix par unité d'énergie ; et
le coût de charge étant dérivé du niveau de batterie actuel, de la consommation d'énergie par unité de distance, d'une distance jusqu'à chacune des bornes de recharge, et du prix par heure et/ou du prix par unité d'énergie identifiés par les données de borne de recharge.

**10.** Procédé selon l'une quelconque des revendications précédentes,
l'identification des bornes de recharge candidates comportant l'application d'un procédé de séparation et d'évaluation pour optimiser la fonction objectif avec les contraintes linéaires.

**11.** Procédé selon l'une quelconque des revendications précédentes,
l'optimisation de la fonction objectif comportant la maximisation de la fonction

$$\sum_{i \in U} \sum_{j \in C(i)} e_{i,j} - \sigma_1 \sum_{i \in U} \sum_{j \in C(i)} e_{i,j} * détour_{i,j} - \sigma_2 \sum_{i \in U} \sum_{j \in C(i)} e_{i,j} - pc_{i,j}$$

où $i \in U$ indique un ensemble d'identifiants de véhicules ;
$j \in C(i)$ indique un ensemble d'identifiants de bornes de recharge ;
$e_{i,j}$ est une variable binaire qui vaut 1 si le véhicule i va aller à la borne de recharge j, 0 autrement ;
$détour_{i,j}$ indique une distance de détour de borne de recharge pour le véhicule i s'il passe par des emplacements de borne de recharge j sur son chemin de l'emplacement de départ à l'emplacement d'arrivée du véhicule ;
$pc_{i,j}$ indique le coût de charge du véhicule i à la borne de recharge j ;
$\sigma_1$ et $\sigma_2$ sont des hyperparamètres prédéfinis dans les intervalles de :

$$0 < \sigma_1 \leq \frac{1}{\max_{i,j} détour_{i,j}}$$

$$0 < \sigma_2 \leq \frac{1}{\max_{i,j}(pc_{i,j})}$$

**12.** Procédé selon l'une quelconque des revendications précédentes,

les contraintes linéaires comportant :

$$\begin{cases} s_{i,j} \geq (ts_i + tsc_{i,j}) * e_{i,j} \ \forall i \in U, \forall j \in C(i) \\ s_{i,j} \leq (te_i + tsc_{i,j}) * e_{i,j} \ \forall i \in U, \forall j \in C(i) \end{cases}$$

et/ou

$$\begin{cases} s_{i,j} \geq os_j * e_{i,j} \ \forall i \in U, \forall j \in C(i) \\ s_{i,j} + du_{i,j} * e_{i,j} \leq oe_j * e_{i,j} \ \forall i \in U, \forall j \in C(i) \end{cases}$$

où

$e_{i,j}$ est une variable binaire qui vaut 1 si le véhicule i va aller à la borne de recharge j, 0 autrement ;

$tsc_{i,j}$ indique un temps de voyage entre l'emplacement de départ du véhicule i et l'emplacement de borne de recharge de la borne de recharge j ;

$ts_i$ et $te_i$ sont respectivement un instant de départ le plus tôt et un instant de départ le plus tard pour le véhicule i ; la variable

$$s_{i,j} = \begin{cases} instant\ de\ début\ de\ charge\ \text{à } j, si\ e_{i,j} = 1 \\ 0, autrement \end{cases}$$

pour tout utilisateur $i \in U$ et borne de recharge $j \in C(i)$ ;

$os_j$ et $oe_j$ sont respectivement un instant d'ouverture et un instant de fermeture pour la borne de recharge j ;

$du_{i,j}$ indique un temps de charge pour le véhicule i à la borne de recharge j.

**13.** Support lisible par ordinateur comprenant des instructions, qui, lorsqu'elles sont exécutées par un processeur, amènent le processeur à réaliser le procédé selon l'une des revendications précédentes.

**14.** Système d'allocation de borne de recharge comprenant :

une unité d'allocation de borne de recharge (110) ;
une borne de recharge (120) :

l'unité d'allocation de borne de recharge (110) étant conçue pour réaliser le procédé selon l'une des revendications 1 à 12 ; et
l'unité d'allocation de borne de recharge (110) étant en outre conçue pour, sur la base du résultat de l'étape d'allocation, envoyer un signal à la borne de recharge (120), le signal comportant un message d'allocation concernant un véhicule en demande particulier et une fenêtre temporelle correspondante.

**15.** Système d'allocation de borne de recharge selon la revendication 14,

la borne de recharge étant capable d'identifier le véhicule en demande particulier ; et
le système d'allocation de borne de recharge empêchant des véhicules autres que le véhicule en demande particulier d'utiliser la borne de recharge (120) pendant les fenêtres temporelles correspondantes.

Fig. 1

| 410 |
| --- |

| 420 |
| --- |

| 430 |
| --- |

| 440 |
| --- |

| 450 |
| --- |

Fig. 2

Fig. 3

120

220

110

230

135

130

Fig. 4